# EUROPEAN PATENT SPECIFICATION

(11) **EP 1 612 193 B1**
(45) Date of publication and mention of the grant of the patent: **24.10.2007**
(21) Application number: 05105588.7
(22) Date of filing: 23.06.2005
(51) Int. Cl.: C03C 3/066, C03C 3/14, C03C 3/19, C03C 3/21, C03C 4/16, C03C 8/16, C03C 8/20

(54) **Pb-Free glass composition for barrier ribs of plasma display panel, and plasma display panel comprising the Pb-free glass barrier ribs**
Bleifreie Glaszusammensetzung zur Herstellung von Isolierstegen in einer Plasmaanzeigentafel, und eine mit derartigen aus bleifreiem Glas hergestellten Isolierstegen versehene Plasmaanzeigentafel
Composition de verre sans plomb destinée à la préparation des nervures d'isolation dans un panneau d'affichage à plasma, et panneau résultant comportant lesdites nervures d'isolation à verre sans plomb

(30) Priority: 29.06.2004 KR 2004049412
(43) Date of publication of application: 04.01.2006
(73) Proprietor: Samsung SDI Co., Ltd., Suwon-si Gyeonggi-do (KR)
(72) Inventor: Baik, Nam-Seok Legal&IP Team, Samsung SDI Co LTD, Kyeonggi-Do (KR); Cho, Nam-Ha Legal&IP Team, Samsung SDI Co LTD, Kyeonggi-Do (KR); Moon, Cheol-Hee Legal&IP Team, Samsung SDI Co LTD, Kyeonggi-Do (KR); Rho, Chang-Seok Legal&IP Team, Samsung SDI Co LTD, Kyeonggi-Do (KR); Kang, Min-Soo is, Sihung-si, Kyonggi-do (KR); Hwang, Myung-Ick, Sihung-si, Kyonggi-do (KR); Sim, Woo-Sung, Sihung-si, Kyonggi-do (KR); Lim, Il-Ji, Yangcheon-gu (KR)
(74) Representative: Hengelhaupt, Jürgen

(56) References cited:
- US-B1- 6 309 992
- US-B1- 6 417 123
- US-B1- 6 589 894
- PATENT ABSTRACTS OF JAPAN vol. 2003, no. 12, 5 December 2003 (2003-12-05) -& JP 2004 006259 A (NIPPON ELECTRIC GLASS CO LTD), 8 January 2004 (2004-01-08)

## Description

### FIELD OF THE INVENTION

The present invention relates to a Pb-free glass composition for barrier ribs of a plasma display panel (hereinafter referred to as "PDP") and a plasma display panel comprising the Pb-free glass barrier ribs prepared therefrom. More particularly, it relates to an environmentally benign Pb-free glass composition for barrier ribs of a PDP in which the etching rate is fast and the barrier ribs can be prepared with high density and precision, and a plasma display panel comprising the Pb-free glass barrier ribs prepared there from.

### BACKGROUND OF THE INVENTION

A PDP is a display device using a plasma phenomenon. A discharge takes place when an electric potential difference over a certain level is applied to two electrodes separated spatially in a non-vacuum gaseous state. Such a discharge is called a gas discharge phenomenon.

A plasma display device is a flat display device using the gas discharge phenomenon to produce a visual display. Recently, generally used PDPs have been driven by a reflective alternating circuit, wherein a phosphor layer is formed in the discharge cells divided by barrier ribs provided on a rear substrate.

The rear substrate and a front substrate (for convenience, called a first substrate and a second substrate, respectively) are aligned substantially in parallel to each other with a predetermined gap between them to provide an assembly such as is provided for a vacuum fluorescent display (VFD), a field emission display (FED), and other flat display devices. The discharge cell is in a vacuum state defined by the substrates and sealed by an adhesive coated around the border of the assembly.

Sand Blast (SB) and Wet Chemical Etching (WCE) methods are mainly employed for forming the barrier ribs on the first substrate of a PDP. In the SB method, a colored material is coated on a glass substrate to a predetermined thickness and dried to form a mask having SB-resistant properties in some pattern, then the region other than the barrier ribs is removed by sand blasting, and sintered to prepare the preferred barrier ribs. The WCE method is a method in which different kinds of colored materials are coated on the glass substrate, sintered at a temperature higher than 500°C, and then an acid resistant mask pattern is formed and the colored materials are selectively etched by an acid-based liquid mixture to form the barrier ribs.

Presently, a mixture paste of a glass powder including lead-oxide at more than 50% by weight and an organic material is mainly used as the material for forming the barrier ribs. However, since lead-oxide is known to be harmful to humans and the environment, the use of lead oxide has shortcomings in that process efficiency is reduced and fabricating cost is increased because additional environmental protection equipment is necessary for producing and using the glass.

Furthermore, the etching rate of the glass powder for barrier ribs including the conventionally used lead-oxide is very low. Therefore, a process preparing the barrier ribs of a single layer is superior to a process of preparing the barrier ribs of two or more layers in that it is less expensive and can be produced at improved efficiency. The slope and the shape of the barrier ribs may be controlled by forming, sintering, and etching the barrier rib layer. In addition, barrier rib material with a low etching rate has shortcoming in that it is harmful to the environment due to the need to use a highly concentrated acid-based mixture during the chemical process.

### SUMMARY OF THE INVENTION

In one embodiment of the present invention, a Pb-free glass composition is provided for barrier ribs for a PDP which is environmentally friendly, has a fast etching rate, and can be used to prepare barrier ribs with high density and precision without using lead oxide.

In another embodiment of the present invention, a PDP including the Pb-free glass barrier ribs is provided which is fabricated from the above mentioned Pb-free glass composition.

In one embodiment of the present invention, a Pb-free glass composition is provided for barrier ribs of a PDP which includes 20 to 70 wt% of ZnO; 10 to 50 wt% of BaO; 10 to 40 wt% of B₂O₃; 5 to 20 wt% of P₂O₅; 0 to 20 wt% of SiO₂; 0 to 20 wt% of Bi₂O₃; 0 to 30 wt% of V₂O₅; 0 to 10 wt% of one or more oxides selected from the group consisting of Na₂O, Li₂O, and K₂O; 0 to 10 wt% of CaO; 0 to 10 wt% of MgO; 0 to 30 wt% of SrO; 0 to 20 wt% of MoO₃; 0 to 10 wt% of Al₂O₃; 0 to 10 wt% of one or more oxides selected from the group consisting of Sb₂O₃, CuO, Cr₂O₃, As₂O₃, CoO, and NiO; and 0 to 10 wt% of TiO₂.

Furthermore, in an embodiment of the present invention, a plasma display panel is provided comprising: a) a first substrate and a second substrate aligned facing each other; b) address electrodes prepared on the first substrate with a dielectric layer covering the first substrate and the address electrodes, and discharge sustain electrodes formed on the second substrate with a dielectric layer covering the second substrate and the discharge sustain electrodes and a protecting layer covering the dielectric layer; c) barrier ribs which are positioned between the first substrate and the second substrate, prepared on the first substrate to divide a plurality of discharge cells, and which are Pb-free glass barrier ribs are made of a Pb-free glass composition as defined in anyone of claims 1 to 10; and d) red, green, and blue phosphor layers which are prepared in the discharge cells divided by the barrier ribs.

### BRIEF DESCRIPTION OF THE DRAWING

The accompanying drawing, which is included to provide further understanding of the invention and is incorporated in and constitutes a part of this specification, illustrates an embodiment of the invention and together with the description serves to explain the principles of the invention.

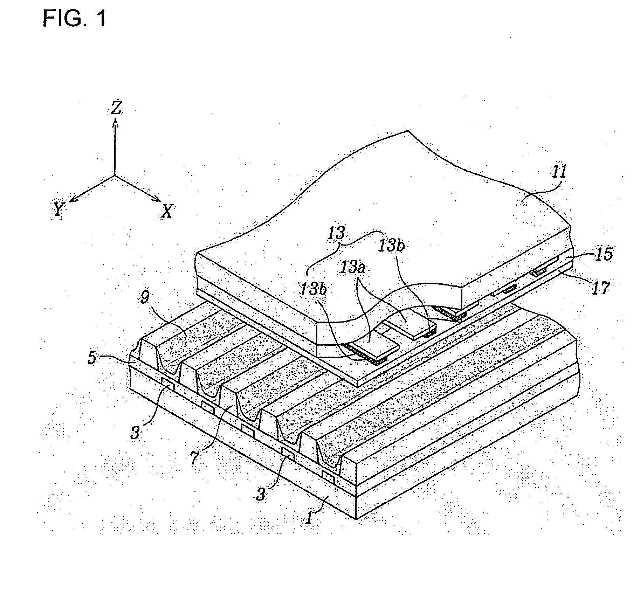

FIG. 1 is an exploded perspective view showing an embodiment of a PDP according to the present invention.

### DETAILED DESCRIPTION

Discharge cells on a first substrate are divided by a Pb-free glass composition of barrier ribs of a PDP in which ZnO, BaO and B₂O₃ are main components, without lead oxide (PbO).

The various components in the subject-matter underlying the claims affect, according to their contents, the glass transition temperature (Tg), softening temperature (Ts), thermal expansion coefficient (TEC), etching rate, dielectric constant, gelation degree, and hue of the Pb-free glass composition for barrier ribs of a PDP according to the present invention. The influences of the respective components on the properties of the Pb-free glass composition according to the present invention are described below.

ZnO is a glass modifier that lowers the Tg, dielectric constant, TEC, and gelation frequency, and improves the etching rate. If the content of ZnO is less than 20 wt% of the total amount of Pb-free glass composition, the etching rate is increased little. In the case of a ZnO content of more than 70 wt%, although the etching rate is increased, the composition cannot work as the barrier ribs due to its low dielectric constant. Therefore, the content of ZnO is preferably from 20 to 70 wt%, and more preferably from 30 to 45 wt%.

BaO is a dark colored glass modifier that lowers Tg of the Pb-free glass composition, and heightens the etching rate, dielectric constant, TEC, and gelation frequency. If the content of BaO is less than 10 wt% of the total amount of Pb-free glass composition, the etching rate is increased little. If the BaO content is more than 50 wt%, the shape stability of the PDP barrier ribs can be hindered due to an increase of TEC. Therefore, the content of BaO is preferably from 10 to 50 wt%, and more preferably from 10 to 25 wt%.

B₂O₃ is a bright colored glass former that lowers the TEC of the Pb-free glass composition, and heightens Tg, the etching rate, and gelation frequency. If the content of B₂O₃ is less than 10 wt% of the total amount of Pb-free glass composition, the etching rate is increased little. If the B₂O₃ content is more than 40 wt%, Tg is increased excessively. Therefore, the content of B₂O₃ is preferably from 10 to 40 wt%, and more preferably from 20 to 35 wt%.

P₂O₅ is a bright colored glass former that lowers the dielectric constant of the Pb-free glass composition, lowers TEC and gelation frequency a little, and heightens Tg and the etching rate a little. If the content of P₂O₅ is more than 20 wt% of the total amount of the Pb-free glass composition, the dielectric constant is excessively lowered. Therefore, the content of P₂O₅ is from 5 to 20 wt%.

SiO₂ is a bright colored glass former that drastically lowers TEC and etching rate of the Pb-free glass composition, lowers gelation frequency, and heightens Tg. If the content of SiO₂ is more than 20 wt% of the total amount of the Pb-free glass composition, the etching rate is drastically lowered due to an excessive increase of Tg. Therefore, the content of SiO₂ is preferably from 0 to 20 wt%.

Bi₂O₃ is a brown colored glass former or glass modifier that lowers Tg of the Pb-free glass composition, heightens TEC and the dielectric constant, heightens the etching rate a little, and has no influence on the gelation frequency. If the content of Bi₂O₃ is more than 20 wt% of the total amount of the Pb-free glass composition, the shape stability of PDP barrier ribs can be hindered due to increase of TEC. Therefore, the content of Bi₂O₃ is preferably from 0 to 20 wt%.

V₂O₅ is a red colored glass former that lowers TEC and the etching rate of the Pb-free glass composition, heightens Tg, affects the hue of the composition by controlling of glass coordination number and surface tension, and has no influence on the gelation frequency. If the content of V₂O₅ is more than 30 wt% of the total amount of the Pb-free glass composition, Tg is excessively increased and the composition is colored. Therefore, the content of V₂O₅ is preferably from 0 to 30 wt%.

Na₂O, Li₂O, and K₂O are yellow colored glass formers that lower Tg of the Pb-free glass composition to control sintering temperature, heighten the dielectric constant, and heighten TEC and the etching rate a little. If the content of the sum of the one or more oxides selected from Na₂O, Li₂O, and K₂O, is more than 10 wt% of the total amount of the Pb-free glass composition, Tg may be drastically lowered and the shape stability of the PDP barrier ribs can be hindered due to the increase of TEC. Therefore, the content of such oxides is preferably from 0 to 10 wt%.

CuO, NiO, Cr₂O₃, As₂O₃, Sb₂O₃, or CoO is used as a glass additive to control coordination number, stability, and mobility of the Pb-free glass composition. The Pb-free glass composition for PDP barrier ribs according to the present invention may include one or more of these oxides, and it is preferable that the content of the oxide is from 0 to 10 wt% of the total amount of the Pb-free glass composition. If the content of the oxide is more than 10 wt%, excessive coloring and deterioration of glass stability occurs.

CaO is a bright colored glass modifier that heightens Tg of the Pb-free glass composition a little, lowers TEC a little, and lowers the etching rate and the gelation frequency. If the content of CaO is more than 10 wt% of the total amount of the Pb-free glass composition, the etching rate is lowered. Therefore, the content of CaO is preferably from 0 to 10 wt%.

MgO is a bright colored glass modifier that heightens Tg of the Pb-free glass composition a little, lowers TEC a little, and lowers the etching rate and the gelation frequency. In particular, it heightens the high temperature viscosity of the Pb-free glass composition. The content of MgO of the total amount of the Pb-free glass composition is preferably from 0 to 10 wt%.

SrO is a dark colored glass modifier that heightens Tg and etching rate of the Pb-free glass composition a little, lowers TEC a little, and heightens the dielectric constant and the gelation frequency. The content of SrO of the total amount of the Pb-free glass composition is preferably less than 30 wt%.

MoO₃ is a dark colored glass modifier that lowers Tg of the Pb-free glass composition, heightens the etching rate and the gelation frequency, and lowers TEC a little. The content of MoO₃ of the total amount of the Pb-free glass composition is preferably less than 20 wt%.

Al₂O₃ is a white colored glass stabilizer that heightens Tg and the dielectric constant of the Pb-free glass composition, and lowers TEC, the etching rate, and the gelation frequency. If the content of Al₂O₃ is more than 10 wt% of the total amount of the Pb-free glass composition, the etching rate is drastically lowered. Therefore, the content of Al₂O₃ of the total amount of the Pb-free glass composition is preferably from 0 to 10 wt%.

TiO₂ is a white colored glass stabilizer that heightens Tg and the dielectric constant of the Pb-free glass composition, and lowers TEC, the etching rate, and the gelation frequency. If the content of TiO₂ is more than 10 wt% of the total amount of the Pb-free glass composition, the etching rate is lowered a little. Therefore, the content of TiO₂ of the total amount of the Pb-free glass composition is preferably from 0 to 10 wt%.

Therefore, in one embodiment of the invention, it is preferable that the Pb-free glass composition according to the present invention includes from 20 to 70 wt% of ZnO; from 10 to 50 wt% of BaO; from 10 to 40 wt% of B₂O₃; from 5 to 20 wt% of P₂O₅; from 0 to 20 wt% of SiO₂; from 0 to 20 wt% of Bi₂O₃; from 0 to 30 wt% of V₂O₅; from 0 to 10 wt% of one or more oxides selected from the group consisting of Na₂O, Li₂O, and K₂O; from 0 to 10 wt% of CaO; from 0 to 10 wt% of MgO; from 0 to 30 wt% of SrO; from 0 to 20 wt% of MoO₃; from 0 to 10 wt% of Al₂O₃; from 0 to 10 wt% of one or more oxides selected from the group consisting of Sb₂O₃, CuO, Cr₂O₃, As₂O₃, CoO, and NiO; and from 0 to 10 wt% of TiO₂.

Furthermore, in another embodiment of the invention, it is preferable that the Pb-free glass composition according to the present invention includes from 30 to 45 wt% of ZnO; from 10 to 25 wt% of BaO; from 20 to 35 wt% of B₂O₃; from 5 to 20 wt% of P₂O₅; from 0 to 20 wt% of SiO₂; from 0 to 20 wt% of Bi₂O₃; from 0 to 30 wt% of V₂O₅; from 0 to 10 wt% of one or more oxides selected from the group consisting of Na₂O, Li₂O, and K₂O; from 0 to 10 wt% of CaO; from 0 to 10 wt% of MgO; from 0 to 30 wt% of SrO; from 0 to 20 wt% of MoO₃; from 0 to 10 wt% of one or more oxides selected from the group consisting of Sb₂O₃, CuO, Cr₂O₃, As₂O₃, CoO, and NiO; from 0 to 10 wt% of Al₂O₃; and from 0 to 10 wt% of TiO₂.

Moreover, in another embodiment of the invention, it is preferable that the Pb-free glass composition according to the present invention includes a) from 20 to 70 wt% of ZnO, from 10 to 50 wt% of BaO, from 5 to 20 wt% of P₂O₅ and from 10 to 40 wt% of B₂O₃; and b) one or more oxides selected from the group consisting of i) first one or more oxides selected from the group consisting of from 0 to 20 wt% of SiO₂, from 0 to 20 wt% of Bi₂O₃, and from 0 to 30 wt% of V₂O₅, ii) second one or more oxides selected from the group consisting of from 0 to 10 wt% of one or more oxides selected from the group consisting of Na₂O, Li₂O, and K₂O, from 0 to 10 wt% of CaO, from 0 to 10 wt% of MgO, from 0 to 30 wt% of SrO, and from 0 to 20 wt% of MoO₃, and iii) third one or more oxides selected from the group consisting of from 0 to 10 wt% of one or more oxides selected from the group consisting of Sb₂O₃, CuO, Cr₂O₃, As₂O₃, CoO, and NiO, from 0 to 10 wt% of Al₂O₃, and from 0 to 10 wt% of TiO₂.

In still another embodiment of the invention, it is preferable that the Pb-free glass composition includes; a) from 20 to 70 wt% of ZnO, from 10 to 50 wt% of BaO, from 10 to 40 wt% of B₂O₃, and from 5 to 20 wt% of P₂O₅; and b) one or more oxides selected from the group consisting of i) first one or more oxides selected from the group consisting of from 0 to 20 wt% of SiO₂, from 0 to 20 wt% of Bi₂O₃, and from 0 to 30 wt% of V₂O₅, ii) second one or more oxides selected from the group consisting of from 0 to 10 wt% of Na₂O, from 0 to 10 wt% of Li₂O, from 0 to 10 wt% of K₂O, from 0 to 10 wt% of CaO, from 0 to 10 wt% of MgO, from 0 to 30 wt% of SrO, and from 0 to 20 wt% of MoO₃, and iii) third one or more oxides selected from the group consisting of from 0 to 10 wt% of one or more oxides selected from the group consisting of Sb₂O₃, CuO, Cr₂O₃, As₂O₃, CoO, and NiO, from 0 to 10 wt% of Al₂O₃, and from 0 to 10 wt% of TiO₂.

In still another embodiment of the present invention, it is preferable that the Pb-free glass composition includes from 30 to 45 wt% of ZnO, from 10 to 25 wt% of BaO, from 20 to 35 wt% of B₂O₃, from 5 to 20 wt% of P₂O₅, from 0 to 2 wt% of Na₂O, from 0 to 2 wt% of Li₂O, and from 0 to 2 wt% of TiO₂. But, it is more preferable that the contents of Na₂O, Li₂O, and TiO₂ are not all zero.
P₂O₅ is included in an amount from 5 to 20 wt% based on the total weight of the Pb-free glass composition. Furthermore preferably the ZnO is included in an amount from 30 to 45 wt% based on the total weight of the Pb-free glass composition. Furthermore preferably the BaO is included in an amount from 10 to 25 wt% based on the total weight of the Pb-free glass composition. Furthermore preferably the B₂O₃ is included in an amount from 20 to 35 wt% based on the total weight of the Pb-free glass composition.

In yet another embodiment of the present invention, it is preferable that the Pb-free glass composition is a powder composition, and more preferable that the average diameter of the powder is from 0.1 to 10 µm. If the average diameter of the powder is less than 0.1 µm, the powders dispersed in the slurry state, in which deterioration thereof is small, become unstable. If the diameter is more than 10 µm, the shape and microstructure of the barrier ribs is not controllable. In addition, it is preferable that the glass softening temperature of the Pb-free glass composition ranges from 350 to 590°C. If the glass softening temperature is lower than 350 °C, the shape of the barrier ribs is unstable. If higher than 590°C, the fabricating process becomes difficult due to deformation of the substrate glass.

In still another embodiment of the invention, it is preferable that TEC of the Pb-free glass composition is from 51×10⁻⁷ to 91×10⁻⁷/°C. If TEC is out of the range, the substrate glass is deformed and the shape of the barrier ribs becomes non-uniform due to a difference of TECs. The dielectric constant of the Pb-free glass composition is from 6 to 12.

In another embodiment of the present invention, it is preferable that the Pb-free glass composition is fabricated by melting, dry air-cooling, dry grinding and crushing. A Pb-free glass composition fabricated according to the above methods has excellent densification and hue.

A binder and an organic solvent may be mixed with the Pb-free glass composition for PDP barrier ribs so that it is used as a paste for PDP barrier ribs, and if necessary, a filler or other additives may be mixed therein.

The Pb-free glass composition for PDP barrier ribs may be prepared by a conventional fabricating method of the glass powder, that is, by mixing, melting, rapid cooling, grinding, drying, filtering, and crushing. The fabricating method of the Pb-free glass composition for PDP barrier ribs includes; a) mixing ZnO, BaO, B₂O₃, and one or more of P₂O₅, SiO₂, Bi₂O₃, V₂O₅, Na₂O, Li₂O, K₂O, Sb₂O₃, CuO, Cr₂O₃, As₂O₃, CoO, NiO, CaO, MgO, SrO, MoO₃, Al₂O₃, and TiO₂ in the aforementioned predetermined contents; b) melting the resulting mixture; and c) rapidly cooling the mixture, followed by grinding, filtering, and crushing.

The melting temperature in the b) step is preferably from 1000 to 1500°C, and more preferably from 1150 to 1350°C. The melting time is preferably from 10 to 60 minutes so that the respective components are uniformly mixed in the melted state. If the melting temperature is lower than 1000°C, the respective components are not uniformly mixed due to their high viscosity, and if higher than 1500°C, a change of ingredients occurs due to volatilization of some components.

The melted Pb-free glass composition is crushed after rapid cooling. The rapid cooling may be performed in a dry or wet state, and it is preferable to use water in the wet process. The crushing process after the rapid cooling may also be performed in a dry or wet state, and water or an organic solvent may be used in the wet crushing process. Preferred examples of the organic solvent including ethanol, methanol, ethyl acetate, toluene, and isopropyl alcohol. The aqueous or organic solvent may be used alone, or two or more may be mixed. For an organic solvent, the degree of gelation and hue after sintering of Pb-free glass powders is controllable.

It is preferable that dry rapid cooling and grinding processes are performed to improve the densification and hue of the Pb-free glass powders.

The ground Pb-free glass powders are filtered, dried, and crushed to prepare powders in which the average diameter is from 0.1 to 10µm.

The PDP of the present invention comprises a) a first substrate and a second substrate positioned opposite each other; b) address electrodes prepared on the first substrate with a dielectric layer covering both the address electrodes and the first substrate, and discharge sustain electrodes prepared on the second substrate with a dielectric layer covering both the discharge sustain electrodes and the second substrate, the dielectric layer being covered by a protecting layer; c) barrier ribs which are positioned between the first substrate and the second substrate, prepared on the first substrate to divide a plurality of discharge cells; and d) phosphor layers of a red, a green, and a blue color prepared in discharge cells which are divided by the above barrier ribs.

FIG. 1 is an exploded perspective view showing an embodiment of a PDP according to the present invention, but it is understood that the PDP according to the present invention is not limited by the structure in the FIG. 1.

With reference to the drawing, in the conventional PDP, address electrodes 3 are prepared along a direction (Y direction of the drawing) on the first substrate 1, and a dielectric layer 5 is prepared on the entire surface of the first substrate 1, covering the address electrodes 3. Barrier ribs 7 are prepared between the respective address electrodes 3 on the dielectric layer 5, and if necessary, the barrier ribs 7 may be prepared either as open or closed types. Phosphor layers 9 of a red, a green, and a blue color are positioned between the respective barrier ribs.

Discharge sustain electrodes 13, which consist of a pair of a transparent electrode 13a and a bus electrode 13b, are formed going along a direction perpendicular to the address electrodes on one side of the second substrate 11 facing the first substrate 1, and a transparent dielectric layer 15 and a protecting layer 17 are positioned on the entire surface of the second substrate, covering the discharge sustain electrodes 13. The areas where the address electrodes 3 and discharge sustain electrodes 13 intersect form discharge cells, which are filled with a discharge gas.

With reference thereto, if an address voltage (Va) is applied between an address electrode and any one of the discharge sustain electrodes to perform address discharge, and thereafter if a sustain voltage (Vs) is applied between a pair of discharge sustain electrodes, vacuum ultraviolet light generated during sustain discharge excites the related phosphor layers 9 so that a visible light is emitted through the transparent front substrate (second substrate) 11.

It is preferable that the barrier ribs 7 included in the above PDP are Pb-free glass barrier ribs prepared from the Pb-free glass composition for PDP barrier ribs.

Furthermore, barrier ribs of the PDP, if necessary, may further include a filler. The content of the filler is preferably less than 70 parts by weight based on 100 parts by weight of the Pb-free glass composition included in the Pb-free glass barrier ribs, and more preferably from 10 to 50 parts by weight. If the content of the filler is more than 70 parts by weight, densification of the barrier ribs may deteriorate after sintering.

Preferable examples of the filler include at least one selected from the group consisting of CrO, MnO₂, CuO, MgO, Al₂O₃, ZnO, TiO₂, mullite (3Al₂O₃·2SiO₂), and cordierite (Mg₂Al₄Si₅O₁₈). But fillers according to the present invention are not limited by the above examples.

The dielectric constant of the PDP Pb-free glass barrier ribs according to the present invention, which does not include the above fillers, is from 6 to 12, and that of the PDP Pb-free glass barrier ribs according to the present invention, which includes the above fillers, is from 6 to 13.

The glass softening temperature of the Pb-free glass barrier ribs included in the PDP according to the present invention is from 350 to 590°C, and its TEC is from 51×10⁻⁷ to 91×10⁻⁷/°C.

The fabrication method of the PDP comprises; a) coating a Pb-free glass composition paste for PDP barrier ribs prepared by mixing i) a Pb-free glass composition for the barrier ribs, ii) a binder, and iii) organic solvents, followed by sintering to form a barrier rib layer; b) coating a photosensitive film resist on the entire surface of the first substrate, covering the barrier rib layer; c) positioning a photo-mask with a predetermined pattern on the entire surface of the photosensitive film resist, followed by exposing and developing to result in patterning the photosensitive film resist; d) removing the region except at the barrier ribs depending on the patterned shape, to form barrier ribs; and e) coating phosphor layers on the first substrate as a rear substrate, including the barrier ribs, followed by assembling, sealing, degassing, gas injection, and aging to fabricate a PDP.

Among the steps for fabrication of the PDP, since a conventional method of PDP preparation can be used in step e), a detailed illustration thereof is not given. The barrier rib formation steps of a) to d) are mainly illustrated hereinafter.

The Pb-free glass composition, a binder, and organic solvents are mixed to prepare a Pb-free glass composition paste for PDP barrier ribs in step a). At this time, the content of each component is controllable according to the general method. Meanwhile, it is preferable that the content of solids included in the Pb-free glass composition paste is from 65 to 85 wt%. If the content of solids is less than 65 wt%, the microstructure does not become fine after film-forming, and if more than 85 wt%, it is difficult to achieve stable dispersion properties.

A general binder used for barrier rib preparation may be used as the binder, and is preferably at least one kind of polymer resin selected from the group consisting of acryl-based resins, epoxy-based resins, and ethyl-cellulose-based resin.

A general solvent used for barrier rib preparation may be used as the organic solvent, and is preferably at least one kind of organic solvent selected from the group consisting of butyl cellosolve (BC), butyl carbitol acetate (BCA), terpineol (TP), and texanol.

Furthermore, as necessary, a filler may be additionally mixed into the Pb-free glass composition paste for the PDP barrier ribs of step a). In this case, the filler is preferably mixed at less than 70 parts by weight based on 100 parts by weight of the Pb-free glass composition, more preferably at 10 to 50 parts by weight.

A preferable example of the filler may be at least one selected from CrO, MnO₂, CuO, MgO, Al₂O₃, ZnO, TiO₂, mullite (3Al₂O₃·2SiO₂), and cordierite (Mg₂Al₄Si₅O₁₈).

When the Pb-free glass composition paste for the barrier ribs is prepared, the Pb-free glass composition paste is coated and sintered on the first substrate, on which address electrodes and a dielectric layer are formed, to form a barrier rib layer. The barrier rib layer may be formed as a single layer including the Pb-free glass composition for PDP barrier ribs according to the present invention. As necessary, barrier rib layers having different ingredients may also be included to form at least two layers. A photoresist is coated on the entire surface of the barrier rib layer such as in step b) after formation of the barrier rib layer. A dry film photoresist or liquid photoresist may be used for coating of the photoresist in step b).

A photomask with a predetermined pattern is positioned on the entire surface of the photoresist such as in step c) after coating of the photoresist, and is exposed and developed for patterning of the photosensitive film. The patterned shape is not limited to a specific shape, as it may be prepared as a stripe, closed, or waffle type according to the finally-formed barrier rib shape.

A region other than the barrier ribs is removed by chemical etching or sand blast methods after the patterning, and remaining photoresist film is removed to form barrier ribs. Preferably the chemical etching method is used for formation of barrier ribs.

A conventional etching method which uses acids such as hydrochloric acid, nitric acid, sulfuric acid, and hydrofluoric acid is employed for the chemical etching, and preferably the etching is done by an acidic aqueous solution including at least one acid selected from the above-mentioned acids at a concentration of from 0 to 10 wt%.

According to the chemical etching method, the etching rate of the Pb-free glass barrier ribs layer in the present invention is from 5 to 30 µm/min, preferably from 10 to 20 µm/min.

A phosphor layer is coated on the first substrate on which barrier ribs are formed by the above steps and the panel is assembled and sealed, followed by degassing, gas injection, and aging to prepare a PDP.

Preferable examples of the present invention are illustrated thereinafter, but the present invention is not limited by these examples.

### Example 1 (preparation of Pb-free glass composition for PDP barrier ribs)

20 wt% of BaO, 30 wt% of ZnO, 30 wt% of B₂O₃, 15 wt% of P₂O₅, and 5 wt% of K₂O were mixed together by a ball mill, and the mixture was melted at 1200°C in a blast furnace. The melted mixture was cooled rapidly using a twin roll, ground crudely by a disc mill, and then ground finely by a dry grinder. The dried mixture was crushed to prepare a Pb-free glass composition for PDP barrier ribs.

### Example 2 (preparation of a Pb-free glass composition for PDP barrier ribs)

A Pb-free glass composition for PDP barrier ribs was prepared by the same procedure as in Example 1, except that 30 wt% of BaO, 20 wt% of ZnO, 30 wt% of B₂O₃, 15 wt% of P₂O₅, and 5 wt% of K₂O were mixed together.

### Example 3 (preparation of a Pb-free glass composition for PDP barrier ribs)

A Pb-free glass composition for PDP barrier ribs was prepared by the same procedure as in Example 1, except that 50 wt% of BaO, 20 wt% of ZnO, 10 wt% of B₂O₃, 5 wt% of P₂O₅, 10 wt% of SiO₂, and 5 wt% of Na₂O were mixed together.

### Example 4 (preparation of a Pb-free glass composition for PDP barrier ribs)

A Pb-free glass composition for PDP barrier ribs was prepared by the same procedure as in Example 1, except that 10 wt% of BaO, 20 wt% of ZnO, 35 wt% of B₂O₃, 20 wt% of P₂O₅, 5 wt% of SiO₂, 5 wt% of Li₂O, and 5 wt% of CaO were mixed together.

### Example 5 (preparation of a Pb-free glass composition for PDP barrier ribs)

A Pb-free glass composition for PDP barrier ribs was prepared by the same procedure as in Example 1, except that 25 wt% of BaO, 20 wt% of ZnO, 40 wt% of B₂O₃, 5 wt% of P₂O₅, 5 wt% of V₂O₅, and 5 wt% of MgO 5 wt% were mixed together.

### Example 6 (preparation of a Pb-free glass composition for PDP barrier ribs)

A Pb-free glass composition for PDP barrier ribs was prepared by the same procedure as in Example 1, except that 15 wt% of BaO, 30 wt% of ZnO, 10 wt% of B₂O₃, 20 wt% of Bi₂O₃, 15 wt% of P₂O₅, 5 wt% of K₂O, and 5 wt% of MoO₃ were mixed together.

### Example 7 (preparation of a Pb-free glass composition for PDP barrier ribs)

A Pb-free glass composition for PDP barrier ribs was prepared by the same procedure as in Example 1, except that 15 wt% of BaO, 35 wt% of ZnO, 30 wt% of B₂O₃, 10 wt% of P₂O₅, 5 wt% of Na₂O, and 5 wt% of Al₂O₃ were mixed.

### Example 8 (preparation of a Pb-free glass composition for PDP barrier ribs)

A Pb-free glass composition for PDP barrier ribs was prepared by the same procedure as in Example 1, except that 10 wt% of BaO, 20 wt% of ZnO, 10 wt% of B₂O₃, 10 wt% of P₂O₅, 5 wt% of K₂O, 30 wt% of V₂O₅, 5 wt% of CaO, 5 wt% of Al₂O₃, and 5 wt% of TiO₂ were mixed together.

### Example 9 (preparation of a Pb-free glass composition for PDP barrier ribs)

A Pb-free glass composition for PDP barrier ribs was prepared by the same procedure as in Example 1, except that 20 wt% of BaO, 35 wt% of ZnO, 25 wt% of B₂O₃, 15 wt% of P₂O₅, 2 wt% of Na₂O, 2 wt% of Li₂O, and 1 wt% of TiO₂ were mixed together.

### Example 10 (preparation of a PDP)

70 parts by weight of the Pb-free glass composition prepared according to Example 1, 3 parts by weight of ethyl-cellulose, 3 parts by weight of butyl carbitol acetate and fillers consisting of 3 parts by weight of TiO₂, 5 parts by weight of Al₂O₃, and 10 parts by weight of ZnO were mixed by a 3 roll mill and bubbles were removed to produce a paste of a Pb-free glass composition. The paste of the Pb-free glass composition was coated to a thickness of 300 to 400 µm on the first substrate, on which address electrodes and a dielectric layer were formed, and dried.

The dried mixture was sintered at 560°C to form a barrier rib layer, and thereafter a dried film resist was coated, exposed, and developed to form a pattern.

The barrier rib layer on which the pattern of the dried film resist was formed was etched by using a 5wt% hydrochloric acid solution, and cleaned to form barrier ribs. It was observed that the etching rate measured during the etching process was 10 to 20 µm/min.

100 parts by weight of a mixed solvent, in which the weight ratio of butyl carbitol acetate and terpineol was 3:7, were mixed with 6 parts by weight of a binder, ethyl-cellulose, to prepare a binder solution, and 40 parts by weight of a red phosphor (Y,Gd)BO₃:Eu, a green phosphor ZnSiO₄:Mn, and a blue phosphor BaMgAl₁₀O₁₇:Eu were respectively mixed with 60 parts by weight of the binder solution. Then the red, green, and blue phosphors were coated in discharge cells of the first substrate divided by the barrier ribs, dried, and sintered to form a phosphor layer.

After the second substrate was prepared by forming discharge sustain electrodes, a dielectric layer, and a protecting layer thereon, a panel including the first substrate and the second substrate was assembled, sealed, and then the PDP was produced by degassing, discharge gas injection, and aging.

### Comparative Example 1 (Pb-free glass composition for barrier ribs of a PDP)

A marketed mother glass material (powder ceramic: DGC-562S) including lead-oxide (PbO) was used.

### Comparative Example 2 (preparation of a PDP)

A PDP was produced by the same procedure as in Example 12, except that the barrier ribs were formed on the first substrate by using the marketed mother glass material according to Comparative Example 1.

The Tg of the mother glass was 490~500°C, its TEC was 75~85×10⁻⁷/°C, and its average diameter was 2~3µm. It was etched by using a 5wt% hydrochloric acid solution, revealing an etching rate of less than 1 µm/min.

The Tg, TEC, and average diameter of the Pb-free glass composition prepared according to Example 1 and the marketed mother glass material of Comparative Example 1 are shown in Table 1.

The Tg and TEC were measured by a Dilatometer (DIL402C, Netzsch, Germany), and average diameters of the powders were measured by a size-analyzer (Mastersizer 2000, Malvern, UK).

**Table 1**

| | Tg (°C) | TEC (/°C) | Average Diameter (µm) | Etching Rate (µm/min) |
|---|---|---|---|---|
| Example 1 | 505 | 88×10⁻⁷ | 2 | 15 |
| Comparative Example 1 | 490∼500 | 75~85×10⁻⁷ | 2∼3 | < 1 |

The Pb-free glass composition for PDP barrier ribs prepared according to Example 1 of the present invention is environmentally friendly since lead-oxide is not included, and as shown in Table 1, and it has similar thermal properties and a much better etching rate.

Furthermore, the Pb-free glass composition for PDP barrier ribs prepared according to Examples 2 to 10 also reveal similar properties to the Pb-free glass composition for PDP barrier ribs prepared according to Example 1.

The Pb-free glass composition for PDP barrier ribs of the present invention is environmentally friendly since lead-oxide is not included, and the consumed electric power can be decreased since its permittivity is lower than that of a conventional Pb-based glass composition. In addition, a wet chemical etching method can be employed to form patterns of barrier ribs due to the excellent etching rate, and there is an advantage of being able to use a low concentration etching solution during chemical etching. Moreover, the PDP including PB-free glass barrier ribs produced according to the present invention makes, with only a single layer, possible formation of barrier ribs pattern with high density and precision.

While the present invention has been described in detail with reference to the preferred embodiments, those skilled in the art will appreciate that various modifications and substitutions can be made thereto without departing from the spirit and scope of the present invention as set forth in the appended claims.

## Claims

1. A Pb-free glass composition for barrier ribs of a plasma display panel, comprising:
from 20 to 70 wt% of ZnO; from 10 to 50 wt% of BaO; from 10 to 40 wt% of B₂O₃; from 5 to 20 wt% of P₂O₅; from 0 to 20 wt% of SiO₂; from 0 to 20 wt% of Bi₂O₃; from 0 to 30 wt% of V₂O₅; from 0 to 10 wt% of one or more oxides selected from the group consisting of Na₂O, Li₂O and K₂O; from 0 to 10 wt% of CaO; from 0 to 10 wt% of MgO; from 0 to 30 wt% of SrO; from 0 to 20 wt% of MoO₃; from 0 to 10 wt% of Al₂O₃; from 0 to 10 wt% of one or more oxides selected from the group consisting of Sb₂O₃, CuO, Cr₂O₃, As₂O₃, CoO, and NiO; and from 0 to 10 wt% of TiO₂.

2. The Pb-free glass composition for the barrier ribs of a plasma display panel according to claim 1, wherein the ZnO is included in an amount from 30 to 45 wt% based on the total weight of the Pb-free glass composition.

3. The Pb-free glass composition for the barrier ribs of a plasma display panel according to claim 1, wherein the BaO is included in an amount from 10 to 25 wt% based on the total weight of the Pb-free glass composition.

4. The Pb-free glass composition for the barrier ribs of a plasma display panel according to claim 1, wherein the B₂O₃ is included in an amount from 20 to 35 wt% based on the total weight of the Pb-free glass composition.

5. The Pb-free glass composition for the barrier ribs of a plasma display panel according to claim 1, wherein the Pb-free glass composition is a powder.

6. The Pb-free glass composition for the barrier ribs of a plasma display panel according to claim 1, wherein the thermal expansion coefficient of the Pb-free glass composition ranges from 51 × 10⁻⁷ to 91 × 10⁻⁷/°C.

7. The Pb-free glass composition for the barrier ribs of a plasma display panel according to claim 1, wherein the dielectric constant of the Pb-free glass composition is from 6 to 12.

8. The Pb-free glass composition for the barrier ribs of a plasma display panel according to one of the preceding claims, wherein the Pb-free glass composition comprises one or more oxides selected from the group consisting of SiO₂, Bi₂O₃, V₂O₅, Na₂O, Li₂O, K₂O, CaO, MgO, SrO, MoO₃, Al₂O₃ Sb₂O₃, CuO, Cr₂O₃, As₂O₃, CoO, NiO, and TiO₂.

9. The Pb-free glass composition for the barrier ribs of a plasma display panel according to one of the preceding claims, wherein the Pb-free glass composition comprises:
from 30 to 45 wt% of ZnO; from 10 to 25 wt% of BaO and from 20 to 35 wt% of B₂O₃.

10. A plasma display panel comprising:
a) a first substrate and a second substrate positioned opposite each other;
b) address electrodes prepared on the first substrate with a dielectric layer covering the first substrate and the address electrodes, and discharge sustain electrodes prepared on the second substrate with a dielectric layer covering the second substrate and the discharge sustain electrodes and a protecting layer covering the dielectric layer;
c) barrier ribs which are positioned between the first substrate and the second substrate, prepared on the first substrate to divide a plurality of discharge cells, wherein the barrier ribs are made of a Pb-free glass composition according to one of claims 1 to 10; and
d) red, green, and blue phosphor layers prepared on the discharge cells which are divided by the above barrier ribs.

11. The plasma display panel according to claim 10, wherein the barrier ribs are Pb-free glass barrier ribs further comprising a filler.

12. The plasma display panel according to claim 11, wherein the filler is included in an amount of less than or equal to 70 parts by weight of the filler based on 100 parts by weight of a Pb-free glass composition for the Pb-free glass barrier ribs.

13. The plasma display panel according to claim 12, wherein the filler is included in an amount of from 10 to 50 parts by weight based on 100 parts by weight of the Pb-free glass composition for the Pb-free glass barrier ribs.

14. The plasma display panel according to claim 11, wherein the filler is selected from the group consisting of CrO, MnO₂, CuO, MgO, Al₂O₃, ZnO, TiO₂, mullite (3Al₂O₃-2SiO₂), cordierite (Mg₂Al₄Si₅O₁₈), and combinations thereof.

15. The plasma display panel according to claim 11, wherein the barrier ribs are the Pb-free glass barrier ribs whose dielectric constant is from 6 to 13.

## Patentansprüche

1. Bleifreie Glaszusammensetzung zur Herstellung von Isolierstegen in einer Plasmaanzeigentafel, aufweisend:
20 bis 70 Gew.-% ZnO, 10 bis 50 Gew.-%, BaO, 10 bis 40 Gew.-% B₂O₃, 5 bis 20 Gew.-% P₂O₅, 0 bis 20 Gew.% SiO₂, 0 bis 20 Gew.-% Bi₂O₃, 0 bis 30 Gew.-% V₂O₅, 0 bis 10 Gew.-% eines oder mehrerer Oxide, welche aus der Gruppe Na₂O, Li₂O und K₂O ausgewählt sind, 0 bis 10 Gew.-% CaO, 0 bis 10 Gew.-% MgO, 0 bis 30 Gew.-% SrO, 0 bis 20 Gew.-% MoO₃, 0 bis 10 Gew.-% Al₂O₃, 0 bis 10 Gew.-% eines oder mehrerer Oxide, welche aus der Gruppe Sb₂O₃, CuO, Cr₂O₃, As₂O₃, CoO und NiO ausgewählt sind, und 0 bis 10 Gew.-% TiO₂.

2. Bleifreie Glaszusammensetzung zur Herstellung von Isolierstegen in einer Plasmaanzeigentafel nach Anspruch 1, wobei das ZnO in einer Menge von 30 bis 45 Gew.-%, bezogen auf das Gesamtgewicht der bleifreien Glaszusammensetzung, vorliegt.

3. Bleifreie Glaszusammensetzung zur Herstellung von Isolierstegen in einer Plasmaanzeigentafel nach Anspruch 1, wobei das BaO in einer Menge von 10 bis 25 Gew.-%, bezogen auf das Gesamtgewicht der bleifreien Glaszusammensetzung, vorliegt.

4. Bleifreie Glaszusammensetzung zur Herstellung von Isolierstegen in einer Plasmaanzeigentafel nach Anspruch 1, wobei das B₂O₃ in einer Menge von 20 bis 35 Gew.-%, bezogen auf das Gesamtgewicht der bleifreien Glaszusammensetzung, vorliegt.

5. Bleifreie Glaszusammensetzung zur Herstellung von Isolierstegen in einer Plasmaanzeigentafel nach Anspruch 1, wobei die bleifreie Glaszusammensetzung ein Pulver ist.

6. Bleifreie Glaszusammensetzung zur Herstellung von Isolierstegen in einer Plasmaanzeigentafel nach Anspruch 1, wobei der Wärmeausdehnungskoeffizient der bleifreien Glaszusammensetzung im Bereich von 51 × 10⁻⁷ bis 91 × 10⁻⁷ /°C liegt.

7. Bleifreie Glaszusammensetzung zur Herstellung von Isolierstegen in einer Plasmaanzeigentafel nach Anspruch 1, wobei die Dielektrizitätskonstante der bleifreien Glaszusammensetzung bei 6 bis 12 liegt.

8. Bleifreie Glaszusammensetzung zur Herstellung von Isolierstegen in einer Plasmaanzeigentafel nach einem der vorhergehenden Ansprüche, wobei die bleifreie Glaszusammensetzung eines oder mehrere Oxide, welche aus der Gruppe SiO₂, Bi₂O₃, V₂O₅, Na₂O, Li₂O, K₂O, CaO, MgO, SrO, MoO₃, Al₂O₃, Sb₂O₃, CuO, Cr₂O₃, As₂O₂, CoO, NiO und TiO₂ ausgewählt sind, aufweist.

9. Bleifreie Glaszusammensetzung zur Herstellung von Isolierstegen in einer Plasmaanzeigentafel nach einem der vorhergehenden Ansprüche, wobei die bleifreie Glaszusammensetzung aufweist:
30 bis 45 Gew.-% ZnO, 10 bis 25 Gew.-% BaO und 20 bis 35 Gew.-% B₂O₃.

10. Plasmaanzeingetafel, aufweisend:
(a) ein erstes Substrat und ein zweites Substrat, welche derart angeordnet sind, dass sie einander gegenüberliegen;
(b) Adresselektroden, welche auf dem ersten Substrat bereitgestellt werden, wobei das erste Substrat eine dielektrische Schicht, welche das erste Substrat und die Adresselektroden bedeckt, aufweist, und Elektroden zur Aufrechterhaltung der Entladung, welche auf dem zweiten Substrat bereitgestellt werden, wobei das zweite Substrat eine dielektrische Schicht, welche das zweite Substrat und die Elektroden zur Aufrechterhaltung der Entladung bedeckt, und wobei die dielektrische Schicht von einer Schutzschicht bedeckt wird;
(c) Isolierstege, welche zwischen dem ersten Substrat und dem zweiten Substrat angeordnet sind, wobei die Isolierstege, welche eine Vielzahl von Entladungszellen trennen, auf dem ersten Substrat bereitgestellt werden, und wobei die Isolierstege aus einer bleifreien Glaszusammensetzung nach einem der Ansprüche 1 bis 10 hergestellt sind; und
(d) rote, grüne und blaue Phosphorschichten, welche auf den durch die obengenannten Isolierstege getrennten Entladungszellen bereitgestellt werden.

11. Plasmaanzeigentafel nach Anspruch 10, wobei die Isolierstege aus bleifreiem Glas hergestellt sind und weiterhin einen Füllstoff aufweisen.

12. Plasmaanzeigentafel nach Anspruch 11, wobei der Füllstoff in einer Menge von weniger als oder gleich 70 Gewichtsteilen des Füllstoffs, bezogen auf 100 Gewichtsteile einer bleifreien Glaszusammensetzung zur Herstellung von Isolierstegen aus bleifreiem Glas, vorliegt.

13. Plaszmaanzeigentafel nach Anspruch 12, wobei der Füllstoff in einer Menge von 10 bis 50 Gewichtsteilen, bezogen auf 100 Gewichtsteile der bleifreien Glaszusammensetzung zur Herstellung von Isolierstegen aus bleifreiem Glas, vorliegt.

14. Plasmaanzeigentafel nach Anspruch 11, wobei der Füllstoff aus der Gruppe CrO, MnO₂, CuO, MgO, Al₂O₃, ZnO, TiO₂, Mullit (3Al₂O₃-2SiO₂), Cordierit (Mg₂Al₄Si₅O₁₈) und deren Verbindungen ausgewählt ist.

15. Plasmaanzeigentafel nach Anspruch 11, wobei die Isolierstege die aus bleifreiem Glas hergestellten Isolierstege, deren Dielektrizitätskonstante bei 6 bis 13 liegt, sind.

## Revendications

1. Composition de verre sans plomb pour nervures d'isolation d'un panneau d'affichage à plasma, comprenant :
20 à 70 % en poids de ZnO ; 10 à 50 % en poids de BaO ; 10 à 40 % en poids de B₂O₃ ; 5 à 20 % en poids de P₂O₅ ; 0 à 20 % en poids de SiO₂ ; 0 à 20 % en poids de Bi₂O₃ ; 0 à 30 % en poids de V₂O₅ ; 0 à 10 % en poids d'un ou plusieurs oxydes choisis dans le groupe constitué du Na₂O, du Li₂O et du K₂O ; 0 à 10 % en poids de CaO ; 0 à 10 % en poids de MgO ; 0 à 30 % en poids de SrO ; 0 à 20 % en poids de MoO₃ ; 0 à 10 % en poids de Al₂O₃ ; 0 à 10 % en poids d'un ou plusieurs oxydes choisis dans le groupe constitué du Sb₂O₃, du CuO, du Cr₂O₃, du As₂O₃, du CoO et du NiO ; et 0 à 10 % en poids de TiO₂.

2. Composition de verre sans plomb pour les nervures d'isolation d'un panneau d'affichage à plasma selon la revendication 1, dans laquelle le ZnO est inclus en quantité de 30 à 45 % en poids sur la base du poids total de la composition de verre sans plomb.

3. Composition de verre sans plomb pour les nervures d'isolation d'un panneau d'affichage à plasma selon la revendication 1, dans laquelle le BaO est inclus en quantité de 10 à 25 % en poids sur la base du poids total de la composition de verre sans plomb.

4. Composition de verre sans plomb pour les nervures d'isolation d'un panneau d'affichage à plasma selon la revendication 1, dans laquelle le B₂O₃ est inclus en quantité de 20 à 35 % en poids sur la base du poids total de la composition de verre sans plomb.

5. Composition de verre sans plomb pour les nervures d'isolation d'un panneau d'affichage à plasma selon la revendication 1, laquelle composition de verre sans plomb est une poudre.

6. Composition de verre sans plomb pour les nervures d'isolation d'un panneau d'affichage à plasma selon la revendication 1, dans laquelle le coefficient de dilatation thermique de la composition de verre sans plomb va de 51 x 10⁻⁷ à 91 x 10⁻⁷/°C.

7. Composition de verre sans plomb pour les nervures d'isolation d'un panneau d'affichage à plasma selon la revendication 1, dans laquelle la constante diélectrique de la composition de verre sans plomb va de 6 à 12.

8. Composition de verre sans plomb pour les nervures d'isolation d'un panneau d'affichage à plasma selon l'une des revendications précédente, laquelle composition de verre sans plomb comprend un ou plusieurs oxydes choisis dans le groupe constitué des SiO₂, Bi₂O₃, V₂O₅, Na₂O, Li₂O, K₂O, CaO, MgO, SrO, MoO₃, Al₂O₃, Sb₂O₃, CuO, Cr₂O₃, As₂O₃, CoO, NiO et TiO₂.

9. Composition de verre sans plomb pour les nervures d'isolation d'un panneau d'affichage à plasma selon l'une des revendications précédente, laquelle composition de verre sans plomb comprend :
30 à 45 % en poids de ZnO ; 10 à 25 % en poids de BaO et 20 à 35 % en poids de B₂O₃.

10. Panneau d'affichage à plasma comportant :
(a) un premier substrat et un second substrat positionnés de façon à être opposés l'un à l'autre ;
(b) des électrodes d'adressage préparées sur le premier substrat avec une couche diélectrique recouvrant le premier substrat et les électrodes d'adressage, et des électrodes d'entretien de décharge préparées sur le second substrat avec une couche diélectrique recouvrant le second substrat et les électrodes d'entretien de décharge et une couche protectrice recouvrant la couche diélectrique ;
(c) des nervures d'isolation qui sont positionnées entre le premier substrat et le second substrat, préparées sur le premier substrat pour séparer plusieurs cellules de décharge, les nervures d'isolation étant réalisées en une composition de verre sans plomb selon l'une des revendications 1 à 10 ; et
(d) des couches de luminophores rouge, vert et bleu préparées sur les cellules de décharge qui sont séparées par les nervures d'isolation ci-dessus.

11. Panneau d'affichage à plasma selon la revendication 10, dans lequel les nervures d'isolation sont des nervures d'isolation en verre sans plomb comprenant en outre une charge.

12. Panneau d'affichage à plasma selon la revendication 11, dans lequel la charge est incluse en quantité inférieure ou égale à 70 parties en poids de la charge sur la base de 100 parties en poids de la composition de verre sans plomb pour les nervures d'isolation en verre sans plomb.

13. Panneau d'affichage à plasma selon la revendication 12, dans lequel la charge est incluse en quantité de 10 à 50 parties en poids sur la base de 100 parties en poids de la composition de verre sans plomb pour les nervures d'isolation en verre sans plomb.

14. Panneau d'affichage à plasma selon la revendication 11, dans lequel la charge est choisie dans le groupe constitué des CrO, MnO2, CuO, MgO, Al₂O₃, ZnO, TiO₂, mullite (3Al₂O₃·2SiO₂), cordiérite (Mg₂Al₄Si₅O₁₈) et des combinaisons de ceux-ci.

15. Panneau d'affichage à plasma selon la revendication 11, dans lequel les nervures d'isolation sont les nervures d'isolation en verre sans plomb dont la constante diélectrique va de 6 à 13.
